(19) Europäisches Patentamt / European Patent Office / Office européen des brevets

(11) **EP 2 359 535 B1**

(12) **FASCICULE DE BREVET EUROPEEN**

(45) Date de publication et mention de la délivrance du brevet:
**26.09.2012 Bulletin 2012/39**

(21) Numéro de dépôt: **09797071.9**

(22) Date de dépôt: **24.11.2009**

(51) Int Cl.:
*H04L 12/26* (2006.01)    *H04L 12/24* (2006.01)

(86) Numéro de dépôt international:
**PCT/FR2009/052278**

(87) Numéro de publication internationale:
**WO 2010/058143 (27.05.2010 Gazette 2010/21)**

(54) **PROCÉDÉ DE MESURE DES PERFORMANCES D'UN RÉSEAU IP ET SYSTÈME ASSOCIÉ**

VERFAHREN ZUR MESSUNG DER LEISTUNGSFÄHIGKEIT EINES IP-NETZWERKS UND DIESBEZÜGLICHES SYSTEM

METHOD FOR MEASURING THE PERFORMANCE OF AN IP NETWORK AND ASSOCIATED SYSTEM

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.11.2008 FR 0857947**

(43) Date de publication de la demande:
**24.08.2011 Bulletin 2011/34**

(73) Titulaire: **Centre National d'Etudes Spatiales 75001 Paris (FR)**

(72) Inventeur: **POIVERT-BECQ, Frédérique F-31290 Vieillevigne (FR)**

(74) Mandataire: **Blot, Philippe Robert Emile Cabinet Lavoix 2, place d'Estienne d'Orves 75441 Paris Cedex 09 (FR)**

(56) Documents cités:
WO-A-2008/121062    US-A1- 2007 115 847
US-A1- 2008 239 967

## Description

L'invention a pour domaine celui des réseaux de communication supportant le protocole IP (« Internet Protocol »). Plus particulièrement, l'invention est relative à un procédé de mesure des performances d'un réseau de communication IP existant.

Un réseau de communication IP est constitué de noeuds et de liaisons reliant les noeuds. Dans le cas d'un réseau composite, les liaisons possèdent des supports physiques différents. Le réseau peut par exemple posséder d'une liaison radio de courte portée, une liaison radio de longue portée, une liaison filaire, ou d'autres types de liaisons.

Après qu'un réseau de communication IP a été déployé, l'exploitant doit pouvoir en connaître les performances.

En effet, il existe un écart entre les performances réelles et les performances théoriques d'un réseau IP, ces dernières étant définies par exemple dans un cahier des charges. Les performances théoriques du réseau sont calculées en ajoutant les performances individuelles des composants du réseau. Mais, d'une part, ces performances individuelles sont évaluées au moyen de simulations et non de tests réels, et, d'autre part, de nombreuses distorsions affectent les performances individuelles d'un composant lorsqu'il est intégré au réseau réel. En particulier, au niveau d'un noeud assurant un changement de support physique entre deux liaisons, les moyens permettant de relayer un datagramme IP introduisent des retards ou des erreurs.

De plus, les performances individuelles des composants du réseau sont évaluées sur le transfert de bits de données appartenant à la portion d'en-tête d'un datagramme IP. Par exemple, le document US 2007/115847 A1 décrit un procédé de mesure et d'estimation des performances d'un réseau, mis en oeuvre par un terminal de contrôle qui sélectionne une liaison de communication et exécute une mesure de performance de communication sur ladite liaison d'une manière passive, par analyse d'informations présentes dans l'entête de chaque paquet transmis. Par exemple encore, le document WO 2008/121062A décrit un terminal de contrôle dans un réseau de communication adapté pour le téléchargement de données de trace qui décrivent les paramètres de performance du réseau et qui sont obtenues par un appareil de surveillance.

Il s'agit donc d'une évaluation des performances du réseau au niveau des couches les plus «basses» du modèle OSI, c'est-à-dire la couche de niveau 1 (physique), la couche de niveau 2 (MAC) et la couche de niveau 3 (réseau), qui sont relatives à la transmission du signal le long du support physique de la liaison. Or, l'exploitant du réseau de communication IP cherche à caractériser la communication en termes d'offre à un utilisateur dont le terminal est connecté au réseau. L'utilisateur se sert du réseau pour accéder à des ressources requises lors de l'exécution d'applications sur le terminal utilisateur. En conséquence, l'utilisateur perçoit la qualité de la communication sur le réseau à travers la bonne exécution de ces applications. Les performances du réseau IP doivent donc être évaluées au niveau des couches les plus «hautes» du modèle OSI, c'est-à-dire la couche de niveau 4 (transport - TCP ou UDP) et les couches de niveaux 5 à 7 (application) ou couches applicatives.

Enfin, l'exploitant du réseau souhaite pourvoir évaluer, et de préférence de manière simple en termes de mise en oeuvre, les performances du réseau de communication IP à tout moment de l'exploitation de celui-ci, et en particulier lors d'une mise à jour d'un composant, tel que le remplacement de commutateurs ou de routeurs aux noeuds du réseau.

L'invention a donc pour but de pallier ces problèmes et de répondre à ces besoins.

Pour cela, l'invention porte sur un procédé de mesure des performances d'un réseau, comportant les étapes consistant à :

- paramétrer une pluralité de requêtes, chaque requête pointant vers une ressource accessible, via ledit réseau, depuis un terminal utilisateur connecté audit réseau, les requêtes paramétrées étant mémorisées dans une base de données ;
- créer au moins une session utilisateur en sélectionnant plusieurs requêtes paramétrées ;
- exécuter une campagne de test consistant à :

  - enchaîner dans le temps l'émission, depuis un terminal utilisateur, des différentes requêtes de ladite au moins une session ; et, pour chacune des requêtes émises,
  - attendre une réponse et calculer la valeur d'au moins une variable caractéristique de la réponse reçue ;

- agréger les valeurs de ladite au moins une variable caractéristique calculées au cours de l'exécution de la campagne de test pour déterminer la valeur d'un estimateur de la qualité de la communication.

Suivant des modes particuliers de l'invention, le procédé comporte une ou plusieurs des caractéristiques suivantes, prise(s) isolément ou suivant toutes les combinaisons techniquement possibles :

- la campagne de test consiste à exécuter, en parallèle, plusieurs sessions utilisateur ;
- les sessions utilisateur sont exécutées par des terminaux utilisateur différents, connectés audit réseau ;
- au cours de l'étape de création d'une session utilisateur, on utilise un paramètre de profil en tant que critère pour effectuer la sélection de certaines requêtes paramétrées, le paramètre de profil définissant un type particulier de comportement d'utilisation des ressources disponibles sur le réseau ;

- ladite au moins une variable caractéristique de la réponse est le temps séparant l'émission d'une requête sur le réseau, de la réception, au niveau du terminal utilisateur, de l'intégralité du fichier de données correspondant à la ressource indiquée par la requête ;
- des ressources accédées durant l'exécution d'une campagne de test sont stockées sur au moins un terminal serveur connecté au réseau, dont l'état est connu au cours de l'exécution de ladite campagne de test ;
- ledit réseau supporte le protocole IP ; et,

lors de l'exécution d'une campagne de test, on mémorise la position et/ou la vitesse du terminal utilisateur lors de l'émission de chacune des requêtes de ladite au moins une session, et ladite étape d'agrégation tient compte des positions et/ou des vitesses instantanées mémorisées pour déterminer ledit estimateur.

L'invention porte également sur un système de mesure d'un estimateur des performances d'un réseau supportant le protocole IP, permettant de mettre en oeuvre le procédé présenté précédemment, et comportant :

- un moyen de base de données ;
- un moyen de paramétrage de requêtes aptes à être émises par un terminal utilisateur connecté audit réseau pour accéder à une ressource disponible sur ledit réseau, lesdits paramètres des requêtes étant stockés dans le moyen de base de données ;
- un moyen de création de session utilisateur permettant la sélection d'une pluralité de requêtes dans la base de données ;
- un moyen d'exécution d'une campagne de test apte à émettre, successivement dans le temps, les différentes requêtes d'au moins une session utilisateur et à calculer, pour chaque requête émise, la valeur d'au moins une variable caractéristique de la réponse reçue par le terminal émetteur ; et,
- un moyen d'agrégation des valeurs de ladite au moins une variable caractéristique sur ladite campagne de test pour déterminer un estimateur de la qualité de la communication.

L'invention et ses avantages seront mieux compris à la lecture de la description qui va suivre, prise uniquement à titre d'exemple, et faite en se référant aux dessins annexés, dans lesquels :

- la figure 1 est une représentation schématique de l'architecture de mise en oeuvre du procédé de mesure d'un estimateur des performances d'un réseau de communication IP ;
- la figure 2 est une représentation, sous forme de blocs, d'un logiciel dont l'exécution sur un terminal utilisateur de l'architecture de la figure 1 met en oeuvre ledit procédé de mesure ; et,

- la figure 3 est un algorithme représentant les différentes étapes dudit procédé de mesure.

La mise en oeuvre du procédé de mesure d'un estimateur des performances d'un réseau de communication IP permet de tester un réseau existant, support de la communication entre au moins un terminal utilisateur et au moins un terminal serveur.

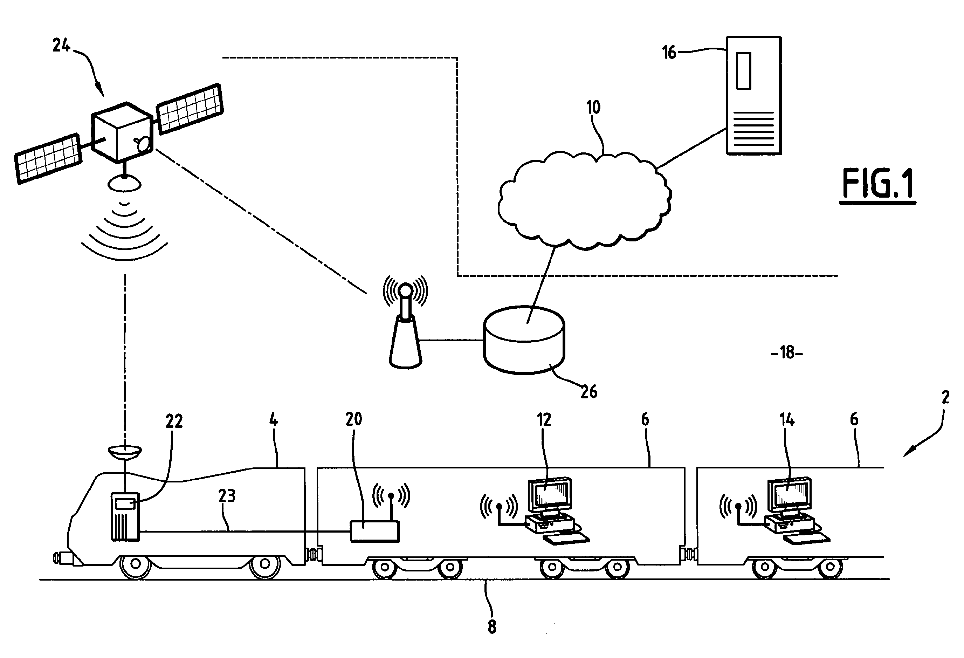

En se référant à l'architecture de la figure 1, un train 2, constitué d'une locomotive 4 et de plusieurs voitures 6, circule le long d'une voie 8. Un service de communication via l'Internet 10 est offert aux passagers du train 2. Un utilisateur se sert d'un terminal utilisateur, tel que les ordinateurs 12 et 14, pour accéder à diverses ressources, stockées sur des terminaux serveur connectés à l'Internet 10, tels que le serveur 16.

Depuis le terminal utilisateur 12 vers l'Internet 10 et le serveur 16, un réseau de communication IP 18 comporte d'abord une liaison sans fil du type Wi-Fi, qui est établie entre chaque terminal utilisateur 12, 14 et un point d'accès local 20. Eventuellement, le train 2 est équipé d'une pluralité de points d'accès locaux 20, par exemple un point d'accès local 20 par voiture 6. Les différents points d'accès locaux 20 sont connectés entre eux et à un ordinateur passerelle 22 située dans la locomotive 4, par des liaisons du type Ethernet par exemple. Ainsi, le train 2 est équipé d'un réseau local 23, formant une section mobile du réseau de communication IP 18. La passerelle 22 est équipée de moyens permettant d'établir une liaison satellitaire avec un satellite 24. Le satellite 24 est en liaison avec une station de base 26, fixe au sol. Le satellite 24 forme un relais de communication entre la passerelle 22 mobile et la station de base 26 fixe. La station de base 26 constitue un point d'accès au réseau Internet 10.

Ainsi, le réseau de communication IP 18 à tester est un réseau composite associant des liaisons ayant des supports physiques différents. Ce réseau 18 autorise la communication entre un terminal utilisateur embarqué à bord d'un train en mouvement et un terminal serveur au sol.

L'exploitant du réseau 18, qui met à disposition des passagers du train 2 le service de communication via l'Internet 10, souhaite connaître la qualité des communications effectivement établies au moyen du réseau 18.

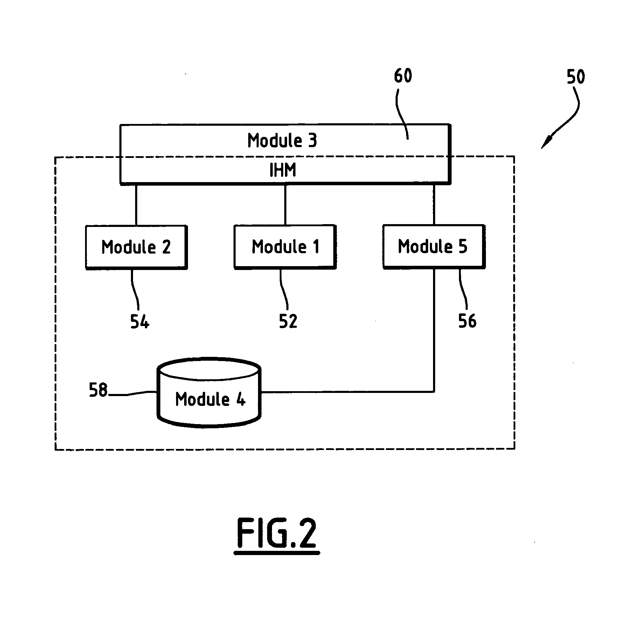

Pour ce faire, un logiciel de test 50, représenté schématiquement sur la figure 2, est exécuté sur un ordinateur présentant des caractéristiques techniques similaires à celles d'un terminal utilisateur 12, 14. Dans ce qui suit, l'ordinateur sur lequel est exécuté le logiciel de test 50 est le terminal utilisateur 12.

L'exécution du logiciel de test 50 a pour but de reproduire aussi fidèlement que possible au moins une et de préférence plusieurs sessions d'utilisation de l'Internet par plusieurs passagers, tout en calculant, en temps réel, les valeurs de variables caractéristiques de la réponse reçue à la suite de l'émission de chacune des requêtes IP constituant les sessions.

Pour mémoire, une requête est un pointeur vers une ressource disponible sur un terminal serveur connecté à l'internet 10 et accessible via le réseau 18 et le réseau Internet 10. Une requête associe un protocole de transfert de données (HTTP, FTP, etc.), l'adresse de la ressource (URL pour « Universal Resource Locator »), le nom du fichier de données, l'extension du fichier de données, et éventuellement d'autres paramètres.

L'extension du fichier de données, indique le format des données présentes dans le fichier et, par conséquent, l'application adaptée à la lecture de ce fichier.

Comme l'indique la première colonne du tableau 1, à la fin de la présente description, des fichiers de données peuvent être transférés selon des protocoles différents. Plusieurs protocoles peuvent être utilisés durant une même campagne de test, de manière à estimer la qualité des couches applicatives du réseau 18.

Le logiciel de test 50 comporte une pluralité d'instructions de programme stockées dans des moyens de mémorisation du terminal utilisateur 12 et aptes à être exécutées par un processeur du terminal utilisateur 12 pour mettre en oeuvre le procédé de mesure des performances du réseau de communication IP.

Le logiciel de test 50 comporte :

- un module 52, permettant de paramétrer des requêtes, de créer des sessions utilisateur, et de préparer des campagnes de test. Le module 52 permet éventuellement de gérer un paramètre de profil utilisateur, comme cela sera décrit ci-après en détail. Enfin, le module 52 assure l'exécution d'une campagne de test ;
- un module 54, permettant de gérer les différents formats et protocoles de transfert des ressources accédées lors d'une campagne de test, et d'associer à chacun des formats et/ou protocoles de transfert une ou plusieurs variables caractéristiques de la qualité de la communication ;
- un module 56, permettant d'agréger et de traiter les résultats d'une ou de plusieurs campagnes de test et de déterminer la valeur d'un estimateur des performances du réseau de communication IP testé;
- un module 58 de base de données, dans laquelle les modules 52, 54 et 56 sont aptes à lire et écrire des données ; et,
- un module 60 constituant une interface homme-machine offrant à l'opérateur conduisant le test, différents écrans adaptés à l'exécution des modules 52, 54 et 56.

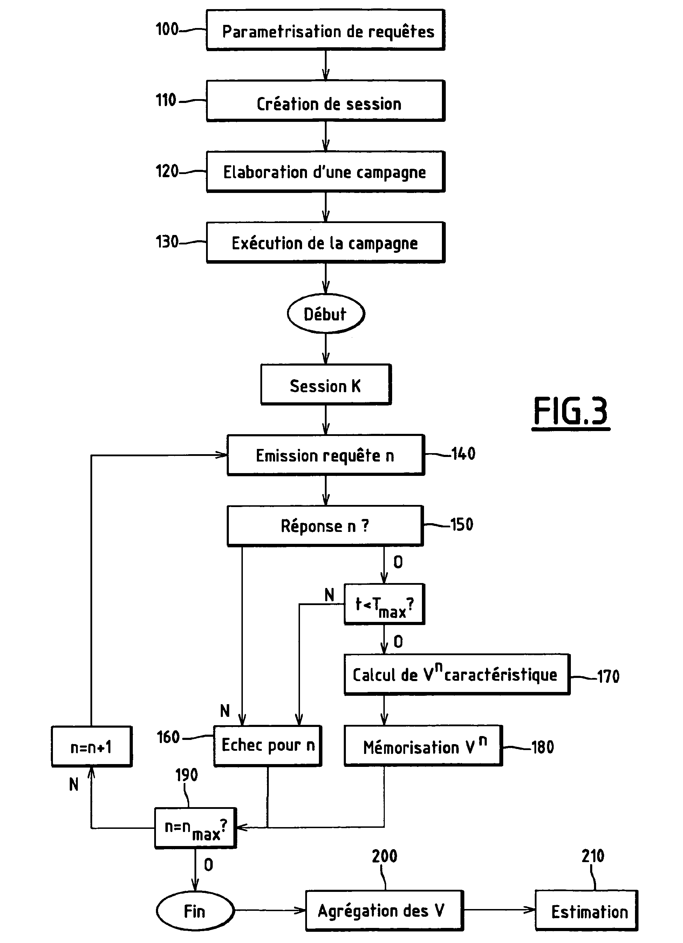

En se reportant à la figure 3, le procédé de mesure des performances d'un réseau IP débute par l'élaboration d'une campagne de test.

L'élaboration comporte, à l'étape 100, la préparation d'une requête. Dans une fenêtre adaptée, ouverte sur l'écran du terminal utilisateur 12, l'opérateur saisie les paramètres nécessaires pour que la requête pointe vers une ressource prédéterminée disponible, via le réseau 18 et l'Internet 10, par exemple sur le serveur 16. Une fois paramétrée, la requête est sauvegardée dans une table de requêtes dans la base de données 58. L'opérateur élabore et stocke ainsi une pluralité de requêtes. Eventuellement, la table de requêtes comporte également une colonne permettant d'associer à une requête une durée correspondant à une temps de lecture par l'utilisateur ou d'utilisation par une application du fichier de données associé à la requête considérée.

Puis, l'élaboration se poursuit, à l'étape 110, par la création d'une session utilisateur qui correspond à un groupe de requêtes représentant le comportement réel d'un utilisateur. Pour créer une session utilisateur, l'opérateur navigue dans la table de requêtes de la base de données 58 et sélectionne certaines des requêtes mémorisées. Les identifiants des requêtes sélectionnées sont regroupés dans une liste ordonnée, associée à la session utilisateur crée. La liste est finalement stockée dans la base de données 58.

L'opérateur peut créer une session utilisateur de plusieurs manières : il peut s'agir d'une extraction aléatoire de plusieurs requêtes de la base de données 58 ; il peut s'agir d'une session utilisateur dédiée au test d'une application particulière, et dans ce cas l'opérateur sélectionne plusieurs requêtes pointant vers des ressources ayant un même format ; il peut s'agir d'une session reproduisant le comportement de navigation sur l'Internet d'un type particulier d'utilisateur. Dans ce dernier cas, on utilise comme critère d'interrogation de la table de requêtes un paramètre de profil représentant différents types de comportement d'utilisation de l'Internet. On peut, par exemple, prédéfinir un profil «Professionnel» permettant d'extraire de la base de données des requêtes pointant vers des ressources correspondant à des pages d'une application de sites Internet de bourse, vers des ressources d'entreprise au moyen d'une connexion VPN (« Virtual Private Network »), et vers des ressources correspondant à la consultation de courriers électroniques. On peut également définir un profil «Loisir» pour lequel on sélectionne, dans la base de données 58, les requêtes pointant vers des ressources associées à des fichiers de musique ou de vidéo.

Après avoir créé une ou plusieurs sessions utilisateur, l'opérateur élabore, à l'étape 120, une campagne de test particulière en sélectionnant, dans la base de données 58, une ou plusieurs sessions utilisateur qui seront à exécuter en parallèle lors de la campagne de test ainsi préparée.

Puis, de manière asynchrone avec les étapes précédentes, à l'étape 130, l'opérateur, au moyen de l'interface du module 52, sélectionne puis lance l'exécution d'une campagne de test particulière comportant au moins la session K.

L'exécution de la campagne de test se traduit par l'émission, par le terminal utilisateur 12 sur le réseau IP 18, des différentes requêtes regroupées dans la session K. Selon une première variante de réalisation, les requêtes sont émises selon un enchaînement temporel qui suit l'ordre dans lequel sont ordonnées les requêtes dans la liste associée à la session K. Selon une seconde variante de réalisation, lors de l'exécution d'une compagne de test, les requêtes sont émises selon un enchaînement temporel aléatoire par rapport à la manière dont sont ordonnées les requêtes dans la liste associée à la session utilisateur.

Plus précisément, à l'étape 140, une première requête est émise et le terminal utilisateur 12 attend (étape 150) la réponse correspondante. Cette attente dure pendant un temps d'attente qui est au maximum égale à un temps d'attente maximum Tmax. Soit le terminal utilisateur 12 reçoit une réponse dans un temps inférieur au temps d'attente maximum Tmax et le procédé de mesure passe à l'étape 170 ; Soit le temps d'attente dépasse le temps d'attente maximum Tmax et le terminal utilisateur 12 associe à la première requête une réponse du type « Echec » (étape 160).

A l'étape 170, le terminal utilisateur 12, ayant reçu une réponse à la requête émise, calcule la valeur d'une variable caractéristique de la réception de données suit à l'émission d'une requête. Comme indiqué dans la seconde colonne du tableau 1, différentes variables caractéristique peuvent être associées à un service d'accès à une ressource.

La valeur de la variable caractéristique calculée pour la requête en cours est stockée dans la base de données 58 à l'étape 180.

Finalement, à l'étape 190, que l'émission d'une première requête ait conduit à un échec ou au calcul d'une valeur d'une variable caractéristique, l'exécution du logiciel 50 passe à la requête suivante dans la liste des requêtes de la session K, à moins que l'ensemble de la liste ait été parcourue. Dans ce cas, lorsque l'ensemble des requêtes de la session K ont été émises, la campagne de test prend fin.

On notera que pour se rapprocher d'avantage d'une session utilisateur normale, un temps d'attente peut être observé entre l'instant de réception de la réponse à une requête et l'instant d'émission de la requête suivante. Ce temps d'attente est équivalent au temps de consultation par l'utilisateur du fichier de données de la réponse reçue. Ce temps d'attente peut être un paramètre entrant dans l'élaboration de la requête.

Lorsqu'au cours d'une campagne de test plusieurs sessions utilisateurs sont exécutées en parallèle, elles le sont soit à partir d'un unique terminal utilisateur émulant plusieurs terminaux utilisateur ayant des adresses IP différentes, soit à partir de plusieurs terminaux utilisateur connectés entre eux. Dans ce dernier cas, les différents terminaux utilisateurs utilisés dans la campagne de mesure ne sont pas nécessairement connectés entre eux. Ils peuvent être indépendants les uns des autres, à condition d'être synchronisés sur une même base de temps. A l'issue de la campagne de test, les résultats obtenus par chacun des terminaux utilisateurs sont agrégés ensemble, au moyen du module d'agrégation 56.

A l'issue d'une campagne de test, les différentes valeurs des variables caractéristiques des réponses sont traitées. Il s'agit d'agréger (étape 200) les résultats des différentes sessions utilisateur entre elles et de rassembler les valeurs des variables caractérisant le même format de ressource et/ou le même protocole de transfert. Le traitement se poursuit à l'étape 210 par le calcul de la valeur d'un estimateur des performances du réseau 18. Par exemple, les temps de réponse mesurés pour l'ensemble des requêtes portant sur une ressource du type « page de site Internet » peut faire l'objet d'un calcul statistique. L'estimateur associé est, par exemple, la moyenne des temps de réponse ou l'écart à cette moyenne. L'opérateur peut, à l'issue du traitement, afficher graphiquement les résultats au moyen de l'interface homme-machine 60.

Dans le mode de réalisation décrit, le procédé est mis en oeuvre pour estimer la qualité d'un réseau ayant une section mobile. En conséquence, il est intéressant d'associer à l'exécution d'une campagne de test, des informations relatives au positionnement et à la vitesse du train 2. Ces données sont obtenues en équipant le terminal utilisateur 12 d'un système de positionnement du type GPS (« Global Positionning System »), de manière à connaître la position et la vitesse instantanées du train 2. Lors de l'exécution de la campagne de test, des mesures de la position et de la vitesse instantanées du train 2 sont réalisées lors de l'émission d'une requête, puis sont stockées dans la base de données 58 en même temps que la valeur de la variable caractéristique de la réponse à cette requête. Le module de traitement des données 56 associe ces mesures de positionnement et de vitesse instantanées, au calcul de l'estimateur. L'itération d'une campagne de test pour des positions et/ou des vitesses différentes du train 2 conduit au calcul d'une série d'estimateurs donnant des informations sur l'impact de la position et de la vitesse du train 2 sur les performances du réseau 18.

Pour que l'estimateur représente au mieux le réseau 18, il est avantageux que les requêtes pointent vers des ressources mises à disposition sur un terminal serveur 16 dont l'état est connu tout au long de l'exécution de la campagne de test. De préférence, le terminal 16 est géré par l'exploitant du réseau IP 18.

Dans ce qui suit, des exemples de métriques associées à un service sont présentées.

Pour le protocole HTTP ou HTTPS, la variable caractéristique « temps de réponse » correspond au temps séparant l'instant d'émission de la requête sur le réseau 18 et l'instant de fin de chargement complet, dans une mémoire du terminal utilisateur 12, du fichier de données associé à la ressource indiquée par cette requête.

Pour le service de voix sur IP (VoIP), il peut s'agir d'une mesure subjective. Dans ce cas, l'exécution de la session de test est interactive et l'on invite l'utilisateur, à travers une interface adaptée, à noter la qualité du service de voix sur IP venant de lui être proposé. Un estimateur MOS pour « mean opinion score » en anglais, est alors utilisé.

Il peut également s'agir d'une mesure objective. Dans ce cas, le calcul d'une variable pertinente a été définie par l'ETSI et est décrite dans l'annexe E de la spécification technique ETSI TS 101 329-5V1.1.2 (2002-01). Le calcul de l'estimateur dérive de la valeur du R-factor décrit dans cette spécification technique.

Pour la mise en oeuvre de ce test objectif, le serveur 16 exécute une application spécifique au service voix sur IP qui permet de mettre en oeuvre, en particulier, les protocoles SIP et RTP.

Le test du service voix sur IP peut être fait dans le sens client-serveur, mais également dans le son serveur-client à condition d'adapter l'application spécifique mettant en oeuvre le protocole SIP, afin de fournir une voie de retour des grandeurs statistiques calculées par le serveur, vers l'ordinateur client.

Dans le sens serveur-client, le serveur stocke, dans ses moyens de mémorisation, un fichier vocal de référence qu'il transmet au client, sur requête de celui-ci, lors de l'exécution d'une session de test du service voix sur IP.

Pour le service de transfert de données UDP, le serveur 16 exécute une application auxiliaire permettant, en collaboration avec l'application de test exécutée sur l'ordinateur client, de tester ce service, soit dans le sens client-serveur, soit dans le sens serveur-client.

Pour tester ce service, lors de la phase de création d'une session, l'utilisateur crée un fichier auxiliaire de caractérisation du service UDP à tester. Ce fichier comporte par exemple :

- l'adresse IP du serveur cible ;
- le sens du transfert de données à tester (serveur-client ou client-serveur) ;
- le profil des données à transmettre (aléatoires ou fixes) ;
- la taille des données utiles à transmettre (fixe, aléatoire, alternée) ;
- le débit à générer ; et,
- la périodicité des échanges des grandeurs statistiques calculées.

Lors de l'exécution de la session du test UDP, dans une phase initiale de celle-ci, le fichier auxiliaire de caractérisation est lu par l'ordinateur client. Les informations contenues dans ce fichier auxiliaire de caractérisation sont utilisées soit par l'application test de l'ordinateur client, soit par l'application auxiliaire exécutée sur l'ordinateur serveur.

Les estimateurs caractéristiques du protocole UDP qui sont déterminés lors du test sont par exemple :

- Le « délai de transit » correspondant au délai entre l'envoi d'un paquet de données et la réception de ce paquet. Le calcul du délai de transit impose que le client et le serveur soient parfaitement synchronisés entre eux. Ceci est réalisé en synchronisant les horloges de ces deux ordinateurs en utilisant, par exemple, des moyens de positionnement par satellite du type GPS qui délivrent un signal d'horloge.

- Le « taux de perte » représentant le pourcentage de paquets perdus. L'entête (« header ») d'un paquet UDP émis comporte un numéro de séquence qui est incrémenté d'une unité à chaque émission d'un nouveau paquet. Le taux de perte est alors facilement calculé par le récepteur à partir du nombre de paquets reçus et du numéro de séquence du dernier paquet reçu.

- La "gigue" (« jitter ») représentant la différence de temps entre les intervalles séparant deux paquets lors de leur émission et lors de leur réception. La gigue est donnée par la formule suivante :

$$J=abs[TR(n)-TR(n-1)-TS(n)+TS(n-1)]$$

où :

  abs () est la fonction retournant la valeur absolue,
  n est le numéro du paquet reçu,
  TR() la table des instants de réception des paquets, calculés localement par le récepteur, et
  TS() la table contenant les instants de transmission des paquets, informations placées par l'émetteur dans l'en-tête des paquets et extraites par le récepteur à la réception du paquet.

Ainsi, dans le sens client-serveur, l'application auxiliaire de test évalue ces grandeurs statistiques, puis les transferts vers le client et l'application principale de test. Pour ce faire, une connexion TCP dédiée au rapatriement des grandeurs statistiques est prévue. Le serveur 16 transmet régulièrement les grandeurs statistiques. Si P est la périodicité de ces transferts de données, en cas d'absence de données pendant plus de deux périodes successives, 2P, la liaison entre le serveur et le client est supposée en échec et entraîne l'interruption de la session du test du protocole UDP.

Dans le sens serveur-client, le fichier auxiliaire donne les informations nécessaires au serveur pour qu'il génère le trafic de données requis pour le test du protocole UDP. C'est le client qui calcule alors les grandeurs statistiques permettant la détermination des estimateurs du service UDP.

D'autres services peuvent être testés de manière quantitative :

  i) Il peut s'agir par exemple d'un test de disponibilité consistant à ce que l'application test exécutée par l'ordinateur client émette périodiquement une requête « ping » vers une machine prédéterminée du réseau, et de préférence la passerelle 22 gérée par l'opérateur du réseau.

Le réseau est considéré comme disponible lorsque la requête « ping » est suivie d'une réponse dans un délai imparti dont la valeur est paramétrable.

L'estimateur « taux de disponibilité » est calculé en divisant le nombre de requête « ping » avec réponse dans le temps imparti, par le nombre total de requête « ping » émises. L'estimateur de disponibilité est affiché en temps réel sur l'interface homme-machine de l'ordinateur client, et en temps différé en complément d'une métrique telle que celle présentée précédemment.

La phase initiale de création d'une session comportant un test de disponibilité comporte la création d'un fichier auxiliaire regroupant les informations nécessaires à la mise en oeuvre de ce test. Ce fichier auxiliaire comporte les paramètres suivants :

- la machine cible de la requête « ping » ;
- le délai entre deux requêtes successives ;
- le délai imparti pour la réponse ;
- la période d'échantillonnage pour le calcul du taux de disponibilité (évaluation sur une heure par exemple).

ii) Il peut également s'agir d'un test de compression. Certains segments du réseau à tester transfèrent des données en les compressant. C'est en particulier le cas lorsque les données transitent par un satellite. Le test de compression permet de mettre en évidence la capacité d'un transfert de données compressées, soit en sens montant (client-serveur), soit en sens descendant (serveur-client).

L'estimateur de compression, qui peut être évalué à plusieurs reprises au cours d'une même session, est par exemple obtenu en comparant la durée de transfert d'un fichier de référence sous forme compressée par rapport à la durée de transfert de ce même fichier non compressé.

iii) Il peut aussi s'agir par exemple encore d'un test de temps de réponse. Ce test est similaire au test de disponibilité à l'exception du fait que la requête n'est pas une simple requête « ping », mais une requête ICMP. Après l'émission d'une requête ICMP, la réponse doit être reçue dans un délai imparti, paramétrable. Si aucune réponse n'est reçue dans le temps imparti, une trace est enregistrée dans un fichier "log".

En variante, un fichier « Log » de l'ordinateur passerelle 22 est utilisé pour les étapes de paramétrage des requêtes et de création des sessions. Pour mémoire, un fichier Log est un fichier texte regroupant toutes les requêtes réémise par l'ordinateur passerelle 22 depuis le réseau local 23 vers le réseau 18. Dans le fichier « log », chaque requête est datée. Au moyen de ce fichier Log, les sessions de N utilisateurs réels sont enregistrées au cours d'un premier déplacement du train le long d'un trajet. La campagne de test consistera à réémettre les requêtes du fichier Log, en respectant la chronologie du fichier Log, de manière à reproduire les N sessions utilisateur antérieures lors d'un nouveau déplacement du train selon le même trajet.

Alors que la description précédente a été faite en rapport avec un réseau supportant le protocole TCP-IP, d'autres protocoles respectant la norme ISO-OSI (acronyme anglais pour « Open Sytem Interconnection ») peuvent être testés en utilisant le présent procédé.

Le système de mesure selon l'invention a été décrit dans le cadre de son utilisation dans un train, mais il permet d'effectuer des campagnes de mesure en tout noeud, fixe ou mobile, d'un réseau quelconque.

Ainsi, la mise en oeuvre de l'invention permet de mesurer les performances d'un réseau réel existant, et ceci du point de vue de l'utilisateur dont le terminal exécute une application qui accède à une ressource particulière.

Tableau I

| FTP GET | 1- Taux d'échec 2- Débit descendant 3- Durée Transfert |
|---|---|
| FTP PUT | 1- Taux d'échec 2- Débit montant 3- Durée Transfert |
| EMAIL SMTP | 1- Taux d'échec 2- Temps de réponse |
| EMAIL POP | 1- Taux d'échec 2- Temps de réponse |
| HTTP et HTTPS | 1- Taux d'échec 2- Temps de réponse |
| IM | 1- Taux d'échec |
| Peer to Peer | 1- Taux d'échec |
| VoIP (Mono-utilisateur) | 1- Taux d'échec 2- MOS (audio) |
| VoIP (Multi-utilisateurs) | 1- Taux d'échec 2- MOS (audio) Local 3- MOS (audio) Distant |
| Streaming | 1- Taux d'échec 2- MOS (audio) 3- MOS (vidéo) 4- MOS (global) |
| UDP (client-serveur) | 1- Délai de transit 2- Taux de perte |

| (suite) | |
|---|---|
| | 3- Gigue |
| UDP (client-serveur) | 1- Délai de transit<br>2-Taux de perte<br>3- Gigue |

**Revendications**

1. Procédé de mesure des performances d'un réseau (18), **caractérisé en ce qu'**il comporte les étapes consistant à :

   - paramétrer (100) une pluralité de requêtes, chaque requête pointant vers une ressource accessible via ledit réseau (18), les requêtes paramétrées étant mémorisées dans une base de données (58) ;
   - créer (110) au moins une session utilisateur en sélectionnant plusieurs requêtes paramétrées ;
   - exécuter (130) une campagne de test consistant à :

      - enchaîner dans le temps l'émission (140), depuis un terminal utilisateur (12) connecté audit réseau, des différentes requêtes de ladite au moins une session utilisateur ; et, pour chacune des requêtes émises,
      - calculer (170) la valeur d'au moins une variable caractéristique des performances du réseau ;

      - agréger (200) les valeurs de ladite au moins une variable caractéristique calculées au cours de l'exécution de la campagne de test pour déterminer (210) la valeur d'un estimateur des performances du réseau.

2. Procédé selon la revendication 1, **caractérisé en ce que** la campagne de test consiste à exécuter (130), en parallèle, plusieurs sessions utilisateur.

3. Procédé selon la revendication 2, **caractérisé en ce que** les sessions utilisateur sont exécutées par des terminaux utilisateur (12, 14) différents, connectés audit réseau (18).

4. Procédé selon l'une quelconque des revendications précédentes, **caractérisé en ce que**, au cours de l'étape de création (110) d'une session utilisateur, on utilise un paramètre de profil en tant que critère pour effectuer la sélection de certaines requêtes paramétrées, le paramètre de profil définissant un type particulier de comportement d'utilisation des ressources disponibles sur le réseau (18).

5. Procédé selon l'une quelconque des revendications précédentes, **caractérisé en ce que** ladite au moins une variable caractéristique des performances du réseau est calculée sur la base de la réception, par le terminal utilisateur (12), de l'intégralité du fichier de données correspondant à la ressource indiquée par la requête émise par ledit terminal utilisateur.

6. Procédé selon l'une quelconque des revendications précédentes, **caractérisé en ce que** des ressources accédées durant l'exécution d'une campagne de test sont stockées sur au moins un terminal serveur (16), connecté audit réseau (18), dont l'état est connu au cours de l'exécution de ladite campagne de test.

7. Procédé selon la revendication 6, **caractérisé en ce que** le serveur dont l'état est connu exécute une application auxiliaire permettant de calculer, au niveau du terminal serveur, la valeur d'au moins une variable caractéristique des performances du réseau, celle-ci étant calculée sur la base de la réception, par le terminal serveur, de la requête émise par un terminal utilisateur.

8. Procédé selon l'une quelconque des revendications précédentes, **caractérisé en ce que** ledit réseau supporte le protocole IP.

9. Procédé selon l'une quelconque des revendications précédentes, **caractérisé en ce qu'**une requête comporte un paramètre correspondant au service de transfert de données à utiliser pour transférer le fichier de données correspondant à la ressource mentionnée dans une requête.

10. Procédé selon l'une quelconque des revendications précédentes, **caractérisé en ce que**, lors de l'exécution d'une campagne de test, on mémorise la position et/ou la vitesse du terminal utilisateur lors de l'émission de chacune des requêtes de ladite au moins une session, et **en ce que** ladite étape d'agrégation tient compte des positions et/ou des vitesses instantanées mémorisées pour déterminer ledit estimateur.

11. Système de mesure d'un estimateur des performances d'un réseau (18), **caractérisé en ce qu'**il permet de mettre en oeuvre le procédé selon l'une quelconque des revendications 1 à 10, et **en ce qu'**il comporte :

   - un moyen de base de données (58) ;
   - un moyen de paramétrage de requêtes qui sont aptes à être émises par un terminal utilisateur connecté audit réseau pour accéder à une ressource disponible via ledit réseau, des paramètres desdites requêtes étant stockés dans le moyen de base de données ;
- un moyen de création de sessions utilisateur permettant la sélection d'une pluralité de requêtes paramétrées dans la base de données ;
- un moyen d'exécution d'une campagne de test apte à émettre, successivement dans le temps, les différentes requêtes constitutives d'au moins une session utilisateur ;
- un moyen de calcul apte à calculer la valeur d'au moins une variable caractéristique des performances du réseau ; et,
- un moyen d'agrégation (56) des valeurs de ladite au moins une variable caractéristique sur ladite campagne de test pour déterminer un estimateur des performances du réseau.

## Claims

1. A method for measuring the performances of a network (18), **characterized in that** it includes the steps consisting in :

   - parameterizing (100) a plurality of requests, each request pointing to a resource that can be accessed, via the network (18), the parameterized requests being stored in a database (58);
   - creating (110) at least one user session by selecting several parameterized requests;
   - running (130) a test campaign comprising:

      - chaining in time the emission (140), from a user terminal (12) connected to the network, of the various requests in said at least one user session; and, for each of the emitted requests,
      - calculating (170) the value of at least one characteristic variable of the performances of the network;

   - aggregating (200) the various values of said at least one characteristic variable calculated during the running of the test campaign to determine (210) the value of an estimator of the performances of the network.

2. The method according to claim 1, **characterized in that** the test campaign consists of running (130) several user sessions in parallel.

3. The method according to claim 2, **characterized in that** the user sessions are run by different user terminals (12, 14) connected to said network (18).

4. The method according to any one of the preceding claims, **characterized in that**, during the step for creating (110) a user session, a profile parameter is used as criterion to select certain parameterized requests, the profile parameter defining a particular type of usage behavior of the resources available on the network (18).

5. The method according to any one of the preceding claims, **characterized in that** said at least one characteristic variable of the performances of the network is calculated based on the reception, by the user terminal (12), of the entire data file corresponding to the resource indicated by the request emitted by said user terminal.

6. The method according to any one of the preceding claims, **characterized in that** the resources accessed during the running of a test campaign are stored on at least one server terminal (16) connected to the network (18), the status of which is known while said test campaign is being run.

7. The method according to claim 6, **characterized in that** the server whereof the status is known runs an auxiliary application making it possible to calculate, at the server terminal, the value of at least one characteristic variable of the performances of the network, the latter being calculated based on the reception, by the server terminal, of the request emitted by the user terminal.

8. The method according to any one of the preceding claims, **characterized in that** said network supports the IP protocol.

9. The method according to any one of the preceding claims, **characterized in that** a request includes a parameter corresponding to the data transfer service to be used to transfer the data file corresponding to the resource indicated in a request.

10. The method according to any one of the preceding claims, **characterized in that**, during the running of a test campaign, the position and/or speed of the user terminal are stored during the emission of each of the requests of said at least one session, and **in that** said aggregation step takes into account positions and/or instant speeds stored to determine said estimator.

11. A system for measuring an estimator of the performances of a network (18), **characterized in that** it makes it possible to carry out the method according to any one of claims 1 to 10, and **in that** it comprises:

   - a database means (58);
   - a means for parameterizing requests that may be emitted by a user terminal connected to said network to access a resource available on the network, a parameter of the request being stored in the database means;

- a means for creating a user session making it possible to select a plurality of requests in the database;
- a means for running a test campaign, able to emit, successively in time, the various requests of at least one user session;
- a means for calculating the value of at least one characteristic variable of the performances of the network and,
- a means (56) for aggregating the values of said at least one characteristic variable on said test campaign to determine a estimator of the performances of the network.

**Patentansprüche**

1. Verfahren zur Messung der Leistungsfähigkeit eines Netzwerks (18), **dadurch gekennzeichnet, dass** es die aus folgendem bestehenden Schritte umfasst:

 - Parametrisieren (100) von einer Vielzahl von Abfragen, wobei jede Abfrage auf eine über das Netzwerk (18) zugängliche Quelle zielt, wobei die parametrisierten Abfragen in einer Datenbasis (58) abgespeichert werden;
 - Einrichten (110) von mindestens einer Anwendersitzung, indem mehrere parametrisierte Abfragen ausgewählt werden;
 - Ausführen (130) von einem Testbetrieb bestehend aus:
 - dem zeitlichem Verketten der Ausgabe (140) von einem an das Netzwerk angeschlossenen Anwenderendgerät (12) von verschiedenen Abfragen der mindestens einen Anwendersitzung; und, für jede ausgesendeten Abfragen;
 - Berechnen (170) des Werts von mindestens einer charakteristischen Variablen der Leistungen des Netzwerks;
 - Aggregieren (200) der im Verlauf der Ausführung des Testbetriebs berechneten Werte der mindestens einen charakteristischen Variablen, um den Wert einer Schätzfunktion der Leistungen des Netzwerks zu bestimmen (210).

2. Verfahren nach Anspruch 1, **dadurch gekennzeichnet, dass** der Testbetrieb darin besteht, parallel mehrere Anwendersitzungen auszuführen (130).

3. Verfahren nach Anspruch 2, **dadurch gekennzeichnet, dass** die Anwendersitzungen von verschiedenen an das Netzwerk (18) angeschlossenen Benutzer-Endgeräten (12, 14) ausgeführt werden.

4. Verfahren nach einem der vorhergehenden Ansprüche, **dadurch gekennzeichnet, dass** im Verlaufe des Schritts des Einrichtens (110) einer Anwendersitzung ein Profilparameter als Kriterium zur Herbeiführung der Auswahl von bestimmten Abfrageparametern verwendet wird, wobei der Profilparameter einen bestimmten Typ von Anwendungsverhalten der in dem Netzwerk (18) zur Verfügung stehenden Quellen definiert.

5. Verfahren nach einem der vorhergehenden Ansprüche, **dadurch gekennzeichnet, dass** die mindestens eine charakteristische Variable der Leistungen des Netzwerks auf der Grundlage des Empfangs, durch das Anwender-Endgerät (12), der Vollständigkeit der Datendatei berechnet wird, die der Quelle entspricht, die durch die von dem Anwender-Endgerät ausgegebene Abfrage angegeben wird.

6. Verfahren nach einem der vorhergehenden Ansprüche, **dadurch gekennzeichnet, dass** die Quellen, auf die während der Ausführung von einem Testbetrieb zugegriffen wird, auf mindestens einem mit dem Netzwerk (18) verbundenen Terminalserver (16) gespeichert werden, dessen Zustand im Verlauf der Ausführung des Testbetriebs bekannt ist.

7. Verfahren nach Anspruch 6, **dadurch gekennzeichnet, dass** der Server, dessen Zustand bekannt ist, eine Hilfsanwendung ausführt, durch die sich auf dem Terminalserver der Wert von mindestens einer charakteristischen Variablen der Leistungen des Netzwerks berechnen lässt, wobei diese auf der Grundlage des Empfangs durch den Terminalserver der durch einen Endanwender ausgegebenen Abfrage berechnet wird.

8. Verfahren nach einem der vorhergehenden Ansprüche, **dadurch gekennzeichnet, dass** das Netzwerk das IP-Protokoll unterstützt.

9. Verfahren nach einem der vorhergehenden Ansprüche, **dadurch gekennzeichnet, dass** eine Abfrage einen Parameter umfasst, der dem Übertragungsdienst von zu verwendenden Daten entspricht, um die Datei von Daten, die der in einer Abfrage erwähnten Quelle entspricht, zu übertragen.

10. Verfahren nach einem der vorhergehenden Ansprüche, **dadurch gekennzeichnet, dass** bei der Ausführung eines Testbetriebs die Position und/oder die Geschwindigkeit des Endanwenders bei der Ausgabe von jeder der Abfragen der mindestens einen Sitzung gespeichert wird, und dadurch, dass der Schritt der Aggregation augenblickliche Positionen und/oder Geschwindigkeiten, die gespeichert sind, um die Schätzfunktion zu bestimmen, berücksichtigt.

11. System zum Messen einer Schätzfunktion der Leistungen eines Netzwerks (18), **dadurch gekennzeichnet, dass** sich das Verfahren nach einem der Ansprüche 1 bis 10 durchführen lässt und dadurch, dass es folgendes umfasst:

- ein Datenbasismittel (58);
- ein Parametrisierungsmittel von Abfragen, die geeignet sind, durch einen Endanwender ausgegeben zu werden, der mit dem Netzwerk verbunden ist, um auf eine Quelle zuzugreifen, die über das Netzwerk zugänglich ist, wobei die Parameter der Abfragen in dem Datenbasismittel gespeichert werden;
- ein Mittel zur Einrichtung von Anwendersitzungen, durch die sich eine Vielzahl von parametrisierten Abfragen in der Datenbasis auswählen lässt;
- ein Mittel zur Ausführung eines Testbetriebs, das dazu geeignet ist, zeitlich aufeinanderfolgend die verschiedenen konstitutiven Abfragen von mindestens einer Anwendersitzung auszugeben;
- ein Rechenmittel, das dazu geeignet ist, den Wert von mindestens einer charakteristischen Variablen der Leistungen des Netzwerkes zu berechnen; und
- ein Aggregationsmittel (56) der Werte der mindestens einen charakteristischen Variablen für den Testbetrieb, um eine Schätzfunktion der Leistungen des Netzwerks zu bestimmen.

FIG.1

60          50

```
┌─────────────────────────────────────────┐
│              Module 3                    │
├─────────────────────────────────────────┤
│                 IHM                      │
└──┬──────────────┬──────────────┬─────────┘
   │              │              │
┌──┴─────┐    ┌───┴────┐    ┌────┴───┐
│Module 2│    │Module 1│    │Module 5│
└──┬─────┘    └───┬────┘    └────┬───┘
   │              │              │
  54             52             56
```

58 — Module 4

## FIG.2

100 — Parametrisation de requêtes

110 — Création de session

120 — Elaboration d'une campagne

130 — Exécution de la campagne

Début

Session K

## FIG.3

Emission requête n —140

Réponse n ? —150

$t<T_{max}$? O

N

O

Calcul de $V^n$ caractéristique —170

N

160 — Echec pour n

Mémorisation $V^n$ —180

n=n+1

N

190

$n=n_{max}$?

N

0

Fin

200

Agrégation des V

210

Estimation

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007115847 A1

- WO 2008121062 A

**Littérature non-brevet citée dans la description**

- *ETSI TS 101 329-5V1.1.2,* Janvier 2002